# EUROPEAN PATENT SPECIFICATION

(11) **EP 1 975 834 B1**
(45) Date of publication and mention of the grant of the patent: **08.02.2012**
(21) Application number: 08250992.8
(22) Date of filing: 20.03.2008
(51) Int. Cl.: G06F 21/00

(54) **Separation of logical trusted platform modules within a single physical trusted platform module**
Trennung logischer Trusted-Platform-Module innerhalb eines einzelnen physikalischen Trusted-Platform-Moduls
Séparation de modules logiques de plateforme sécurisée dotés d'un seul module physique de plateforme sécurisée

(30) Priority: 29.03.2007 US 693242
(43) Date of publication of application: 01.10.2008
(73) Proprietor: Intel Corporation, Santa Clara, CA 95052 (US)
(72) Inventor: Wiseman Willard M., Tigard, OR 97224 (US); Grawrock, David W., Aloha, OR 97007 (US)
(74) Representative: Beresford, Keith Denis Lewis

(56) References cited:
- GB-A- 2 420 432
- US-A1- 2005 210 467
- US-A1- 2005 246 552
- US-A1- 2005 262 571
- US-A1- 2006 020 781
- US-A1- 2006 026 419
- US-A1- 2006 212 939
- US-A1- 2007 016 801

## Description

### FIELD OF THE INVENTION

The invention relates to trusted platforms. More specifically, the invention relates to logical and physical trusted platform modules (TPMs).

### BACKGROUND OF THE INVENTION

Computer security issues are becoming more widespread as an ever-increasing number of diverse computer applications are developed. Problems such as viruses, worms, spyware, and theft are plaguing the population of computer users. Additionally, as the Internet connects more people to each other, it also is fueling security problems because confidential information is more easily compromised.

A number of technology companies are promoting and contributing to the Trusted Computing Group, which develops, defines, and promotes open standards for hardware-enabled trusted computing and security technologies. These technologies include hardware modules and software interfaces that aim to work across multiple platforms. One major development that has become an increasing success is the Trusted Platform Module (TPM) and its set of specifications. The TPM is a module designed to independently handle trust-based operations on a given computer system.

Each TPM has a number of internal functions and hardware to execute them. A TPM may include an execution engine, program code, storage, registers, encryption algorithms and key generators among other items. Detailed information regarding the fundamentals of a TPM is readily available from the Trusted Computing Group organization. Their latest version of the TPM specification is Revision 94 from March 2006.

As TPMs evolve over time, it becomes necessary to handle migration from hardware utilizing one version of the TPM specification to hardware able to utilize the next version. New versions of the specification may require new encryption and hash algorithms among other things. Maintaining backward compatibility for existing applications that use the original algorithms while providing the new algorithms for new applications is important. Also, some computing environments, such as partitioned hardware platforms, may require two sets of algorithms and, therefore, two sets of key material and configuration information.

Currently available TPM designs require a set of key material and configuration information to perform trust operations. In some embodiments, this key material and configuration information is called a Trust Root. Current TPM architecture allows for only one Trust Root per TPM.

By way of background reference is made to United States Patent Application US 2006/020751 A1 which concerns a method and apparatus for providing secure virtualisation of a trusted platform module "TPM". This document discloses the provision of instructions that are useful for providing secure virtualisation of a TPM. These instructions may implement a virtual TPM service- This document details the setup process of a virtual TPM.

### SUMMARY OF THY INTENTION

The prevent invention concerns a trusted platform module "TPM" device, such as the device of the kind described in the aforementioned background reference, comprising storage to contain a plurality of trust roots.

By way of improvement, in the TPM device of the present invention there is provided TPM logie to: receive a command ordinal sent to the device, the command ordinal comprising an ordinal index to point to a command, and a purview value repurposed to point to one of the plurality of trust roots; determine which trust root the command ordinal is targeting by examining the purview value, wherein the purview value is repurposed as a trust root index to point to one of the plurality of trust roots; and execute the command pointed to by the ordinal index, wherein the targeted trust root is used during execution.

The present invention also concerns a method, comprising storing a plurality of trust roots within a TPM device.

In accordance with the present invention this method includes steps of: receiving a command ordinal sent to the device, the command ordinal comprising an ordinal index to point to a command, and a purview value, repurposed to point to one of the plurality of trust roots; determining which trust root the command ordinal is targeting by examining the purview value, wherein the purview value is repurposed to point to one of the plurality of trust roots; and executing the command pointed to by the ordinal index, wherein the targeted trust root is used during execution.

### BRIEF DESCRIPTION OF THE DRAWING

The present invention is illustrated by way of example and is not limited by the figures of the accompanying drawings, in which like references indicate similar elements, and in which:
**Figure 1** describes one embodiment of a trusted platform module (TPM) device with multiple trusted roots.
**Figure 2** illustrates the current data stored in a TPM command ordinal and the new, repurposed data stored in the TPM command ordinal to allow for multiple logical TPMs.
**Figure 3** is a flow diagram of one embodiment of a process to store multiple Trust Roots and associate them with command ordinals.
**Figure 4** is a flow diagram of one embodiment of a process to receive a command ordinal and use the target Trust Root to execute the ordinal command.
**Figure 5** is a block diagram of a computer system which may be used with embodiments of the present invention.

### DETAILED DESCRIPTION OF THE INVENTION

Embodiments of a device, method, and system to separate logical trusted platform modules within a single physical trusted platform module are described. In the following description, numerous specific details are set forth. However, it is understood that embodiments may he practiced without these specific details. In other instances, well-known elements, specifications, and protocols have not been discussed in detail in order to avoid obscuring the present invention.

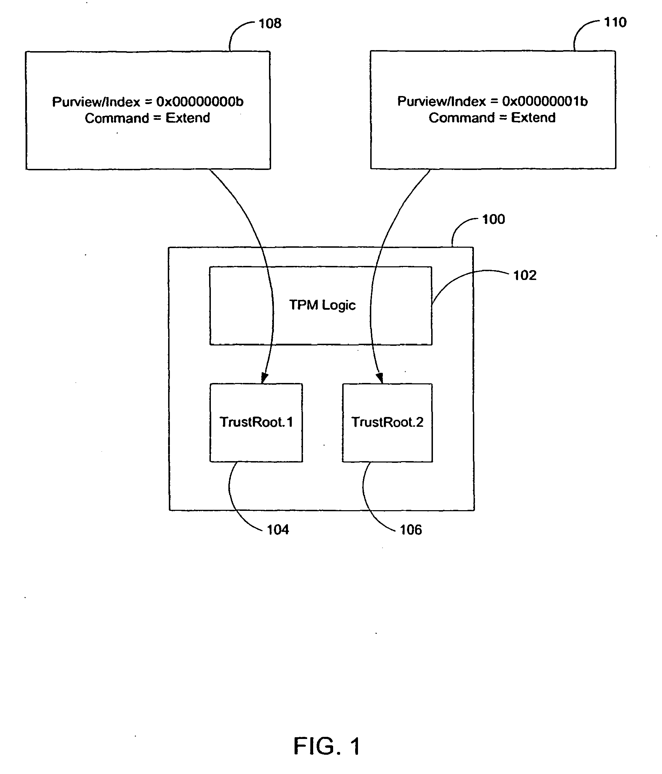

**Figure 1** describes one embodiment of a trusted platform module (TPM) device with multiple trusted roots. In many embodiments, a TPM 100 presides in a computer system to assist in performing trust-based operations. The basic design of TPM 100 has a number of internal components for trust-based computing operations. In different embodiments, the TPNI 100 includes an execution engine, program code to run on the execution engine, non-volatile storage, volatile storage, a set of platform configuration registers (PCRs), as well as encryption algorithms/engines, and key generators. A majority of the internal components listed are not shown in Figure 1 but information regarding general TPM architecture can be readily obtained from the Trusted Computing Group or from numerous TPM data sheets published by the companies that manufacture TPMs.

The TPM 100 in Figure 1 includes TPM logic 102 and at least two Trust Roots, TrustRoot.1 (104) and TrustRoot.2 (106) stored in memory storage in the TPM 100. In some embodiment, this memory storage for the Trust Roots may be non-volatile memory. In some embodiments, the non-volatile memory may be flash memory. In different embodiments, TPM logic 102 may include hardware, software, or a combination of both. TPM logic 102 receives command ordinals as input, also referred to as 4-byte TPM_COMMAND_CODE operands. A command ordinal is an index that points to a specific trusted computing operation stored within the TPM.

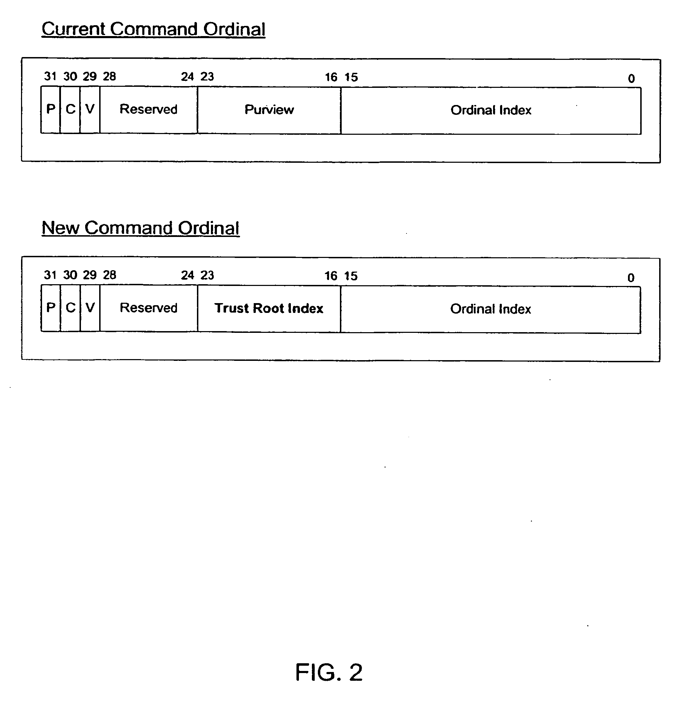

Turning to Figure 2 for a moment, **Figure 2** illustrates the current data contained within a TPM command ordinal and the new, repurposed data stored in the TPM command ordinal to allow for multiple logical TPMs. In one embodiment, the current data stored in the TPM command ordinal includes P (bit 31) which notifies whether or not the command is protected. Next, T (bit 30) notifies whether the command passes through to either protected or unprotected components. Next, V (bit 29) notifies if the command is TPM defined or vendor defined. Then there are 5 bits (bits 28-24) that are reserved. Next is the 8-bit Purview field (bits 23-16) which was originally designated to indicate which platform the command was designated for. Different platforms could include a desktop computer, mobile computer, personal digital assistant, server, etc. This field has not been made of any use since the TPM spec was originally created. Finally, the 16-bit Ordinal Index field (bits 15-0) is an index pointer to the command to execute in the TPM.

In many embodiments, the data stored in the new TPM command ordinal has been modified from the original version. The unused Purview field has been repurposed with a Trust Root Index field. The Trust Root Index includes an index pointer to a trust root in the TPM.

Returning to Figure 1, in one embodiment, there are two Trust Roots, TrustRoot.1 (104) and TrustRoot.2 (106) stored within the TPM. In different embodiments, a Trust Root may contain a number of different key materials as well as other personalization and configuration information. Key materials may include TPM owner information as well as TPM user information. In many embodiments, a Trust Root includes at least an Endorsement Key, a Storage Root Key, and a uniqueness proof (a tpmProof). The additional personalization and configuration information may include platform integrity information contained in one or more PCRs in some embodiments. Additionally, one or more attributes of the objects within the Trust Root may be stored within the Trust Root.

The Trust Root, in many embodiments, incorporates trust-related information that allow for trust to be maintained during the execution of instructions, transfer of data, etc. The Endorsement Key refers to the cryptographic uniqueness inside a TPM. The Storage Root Key refers to the cryptographic key that forms part of the Root of Trust for Storage as defined by the Trusted Computing Group. The tpmProof refers to a nonce (a random number) that each TPM maintains to validate that the data originated at this TPM, to the owner of the TPM. In many other embodiments, there may be a number of other trust related keys incorporated into the Trust Root.

While Figure 1 shows that in this embodiment there is only one physical TPM, each Trust Root stored within the TPM allows the platform and the user working with the platform to utilize the device as a separate and individual logical TPM. Therefore, one physical TPM can contain many logical TPMs, wherein each logical TPM is associated with its own Trust Root stored within the physical TPM.

Each Trust Root is unique. Since Figure 1 has two completely independent Trust Roots, each command ordinal received by the TPM 100 would be required to notify which Trust Root is to be used when the command is executed. For example, a command ordinal 108 is received by the TPM 100 and the ordinal index points to a command. In this particular example, the ordinal index points to the Extend command, though in other embodiments, the ordinal index may point to any valid trusted computing operation stored within the TPM. The Purview field, which has been repurposed into the Trust Root Index field is set to 0 (Ox00000000b). Therefore, TPM Logic 102 receives the command ordinal 108, determines the value of the Purview/Trust Root Index field is 0, and utilizes TrustRoot.1 for execution of that command (i.e. index 0 points to TrustRoot.1).

Alternatively, a command ordinal 110 is received by the TPM 100 and the ordinal index points to a command, in this example the ordinal index points to the Extend command again. But, in the command ordinal 110, the Purview/Trust Root Index field is set to 1 (0x00000001b). Therefore, TPM Logic 102 receives the command ordinal 110, determines the value of the Purview/Trust Root Index field is 1, and utilizes TrustRoot.2 for execution of that command (i.e. index 1 points to TrustRoot.2). The Extend command was used specifically as an example command, in many other embodiments, any TPM-based command can be executed by the logical TPM that is targeted.

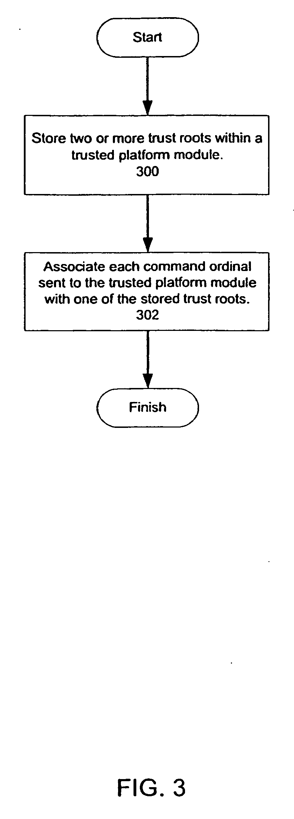

**Figure 3** is a flow diagram of one embodiment of a process to store multiple Trust Roots and associate them with command ordinals. The process is performed by processing logic that may comprise hardware (circuitry, dedicated logic, etc.), software (such as is run on a general purpose computer system or a dedicated machine), or a combination of both. Referring to Figure 3, the process begins by processing logic storing two or more trust roots within a single trusted platform module (processing block 300).

Trust Roots are comprised of multiple keys and other trust material, thus, in some embodiments, the Trust Root value is created through a hash function. Each piece of data entered into the Trust Root (i.e. Endorsement Key, Storage Root Key, etc.) is added through the hash function to create a unique Trust Root value. The Trust Root contains various information, some is stored permanently, some is temporary. For example, the Endorsement Key is determined only once for the life of the TPM. The tpmProof is determined only when the ownership of the TPM changes. A contextNonce, a value utilized to allow items to swap in and out of the TPM, is temporary. Additional temporary information, such as the locality of a command, may be stored within a Trust Root. Because some of the information located within the Trust Root is not permanent, the Trust Root information must be stored in memory that is rewriteable. Non-volatile memory within the TPM can accomplish the task of storing permanent information through multiple power downs and also store non-permanent information at each boot.

The process continues with processing logic associating each command ordinal sent to the trusted platform module with one of the stored Trust Roots (processing block 302) and the process is finished.

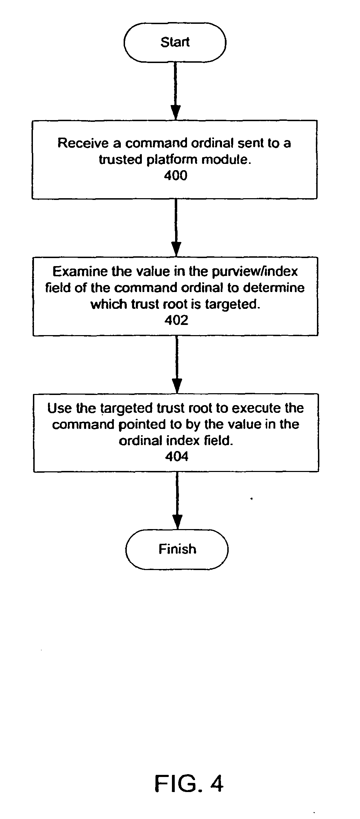

In many embodiments, command ordinals are sent to the TPM so the TPM can perform a trust-based operation. A trust-based operation includes any of the commands stored within the TPM. A list of commands may be found in the latest TPM specification published by the Trusted Computing Group organization. As described in Figure 2, command ordinals include the Purview/Trust Root Index and Ordinal Index parameters. Furthermore, in some embodiments, processing logic may receive the command ordinal, parse the Purview/Trust Root Index and Ordinal Index out of the command ordinal, and associate the command ordinal (and the parsed Ordinal Index value) with the Trust Root pointed to by the Purview/Trust Root Index value. The set of operations described are shown in the flow diagram in Figure 4.

Thus, **Figure 4** is a flow diagram of one embodiment of a process to receive a command ordinal and use the target Trust Root to execute the ordinal command. The process is performed by processing logic that may comprise hardware (circuitry, dedicated logic, etc.), software (such as is run on a general purpose computer system or a dedicated machine), or a combination of both. Referring to Figure 4, the process begins by processing logic receiving a command ordinal sent to a trusted platform module (processing block 400). In one embodiment, the command ordinal is directed to TPM logic within the TPM.

Next, processing logic (in many embodiments this is the TPM logic) examines the value in the Purview/Trust Root Index field (as described in reference to Figure 2) of the command ordinal to determine which Trust Root is targeted (processing block 402). In some embodiments, processing logic parses the Purview/Trust Root Index value and the Ordinal Index value out of the received command ordinal. With the Purview/Trust Root Index value and the Ordinal Index value available, processing logic can perform a look up for the targeted Trust Root and the targeted command within the non-volatile storage and program code respectively.

Then processing logic uses the targeted trust root to execute the command pointed to by the value in the ordinal index field (processing block 404) and the process is finished. In many embodiments, the trust information referenced by the Trust Root (including key values and other configuration information) are required to execute any TPM-based command in a trusted manner.

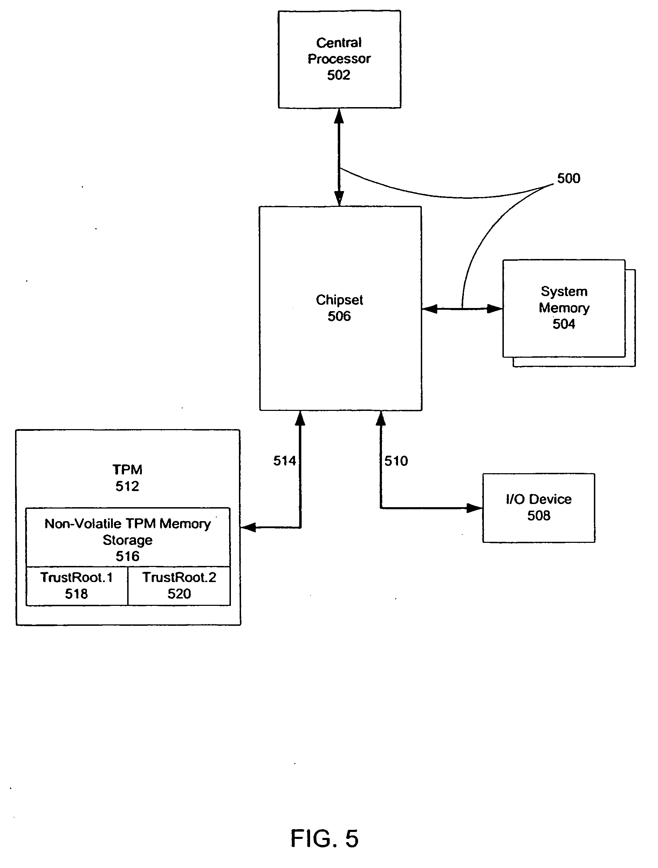

**Figure 5** is a block diagram of a computer system which may be used with embodiments of the present invention. The computer system comprises a processor-memory interconnect 500 for communication between different agents coupled to interconnect 500, such as processors, bridges, memory devices, etc. Processor-memory interconnect 500 includes specific interconnect lines that send arbitration, address, data, and control information (not shown). In one embodiment, central processor 502 is coupled to processor-memory interconnect 500. In another embodiment, there are multiple central processors coupled to processor-memory interconnect (multiple processors are not shown in this figure).

Processor-memory interconnect 500 provides the central processor 502 and other devices access to the system memory 504. A system memory controller controls access to the system memory 504. In one embodiment, the system memory controller is located within the chipset 506 that is coupled to processor-memory interconnect 500. In another embodiment, a system memory controller is located on the same chip as central processor 502 (not shown). Information, instructions, and other data may be stored in system memory 504 for use by central processor 502 as well as many other potential devices.

I/O devices are coupled to the chipset 506 through one or more I/O interconnects. For example I/O device 508 is coupled to the chipset 506 through I/O interconnect 510. In many embodiments, interconnect 510 is a point-to-point interconnect.

In many embodiments, TPM device 512 (TPM) is coupled to chipset 506 through interconnect 514. In different embodiments, interconnect 514 may be a point-to-point interconnect, a broadcast protocol interconnect, a low pin count (LPC) interconnect, or any other valid interconnect. In other embodiments, TPM 512 may be coupled internally to chipset 506 and is located internally within chipset 506 (these embodiments are not shown). In other embodiments, TPM 512 may be located on an external I/O device such as I/O device 508 (not shown). In many embodiments, TPM 512 manages the trust of the computer system. TPM 512 includes internal storage to store important information. In many embodiments, this storage includes non-volatile TPM memory storage 516. In many embodiments, non-volatile TPM memory storage 516 comprises flash memory. In many embodiments, TPM 512 has internal logic that can be utilized to store multiple Trust Roots within the TPM storage to create multiple logical TPMs within the single physical TPM 512. For example, in one embodiment, TrustRoot.1 (518) and TrustRoot.2 (520) are stored within the non-volatile TPM memory storage.

In many embodiments, command ordinals sent to TPM 512 from other locations within the computer system target individual logical TPMs stored within the physical TPM 512 by sending Trust Root Index pointers within the Purview/Trust Root Index value within each command ordinal. Logic within the TPM 512 can, in turn, execute the TPM-based command, pointed to by the Ordinal Index value within the command ordinal, with the correct Trust Root (i.e. logical TPM).

Thus, embodiments of a device, method, and system to separate logical trusted platform modules within a single physical trusted platform module are described. These embodiments have been described with reference to specific exemplary embodiments thereof. It will be evident to persons having the benefit of this disclosure that various modifications and changes may be made to these embodiments without departing from the scope of the embodiments described herein. The specification and drawings arc, accordingly; to be regarded in an illustrative rather than a restrictive sense.

## Claims

1. A trusted platform module "TPM" device (100), comprising:
storage to contain a plurality of trust roots (104, 106);
**characterised by**: -
TPM logic (102) to:
receive (400) a command ordinal sent to the device, the command ordinal comprising an ordinal index to point to a command, and a purview value repurposed to point to one of the plurality of trust roots;
determine (402) which trust root the command ordinal is targeting hy examining the purview value, and
execute (404) the command pointed to by the ordinal index, wherein the targeted trust root is used during execution.

2. The device or claim 1, wherein each trust root comprises:
an Endorsement Key;
a Storage Root Key;
a uniqueness proof; and
one or more additional pieces of key information and configuration information.

3. The device of claim 1, wherein the storage comprises non-volatile flash memory.

4. A method, comprising:
storing a plurality of trust roots within a trusted platform module "TPM" device;
**characterised by** the following steps:
receiving a command ordinal sent to the device, the command ordinal comprising an ordinal index to point to a command, and a purview value, repurposed to point to one of the plurality of trust roots;
determining (402) which trust root the command ordinal is targeting by examining the purview value; and
executing (404) the command pointed to by the ordinal index, wherein the targeted trust root is used during execution.

5. The method of claim 4, wherein each trust root comprises:
an Endorsement Key;
a Storage Root Key; and
a uniqueness proof; and
one or more additional pieces of key information and configuration information.

6. The method of claim 4, wherein the storage comprises non-volatile flash memory.

7. A System, comprising:
a first interconnect (500);
a processor (502) coupled to the first interconnect;
a memory (504) coupled to the first interconnect;
a second interconnect (510), wherein the second interconnect comprises a point-to-point interconnect;
a chipset (506) coupled to the first and second interconnects; and
the trusted platform module "TPM" (512) of any one of the preceding claims 1 - 3, coupled (514) to the chipset.

8. The system of claim 7, further comprising one or more additional processors coupled to the first interconnect.

## Patentansprüche

1. Vorrichtung (100) eines Trusted-Platform-Moduls "TPM", aufweisend:
einen Speicher zur Aufnahme mehrerer Trust-Roots (104, 106),
**gekennzeichnet durch**:
eine TPM-Logik (102), um
ein der Vorrichtung übersandtes Befehlsordinal zu empfangen (400), das einen Ordinalindex zum Verweis auf einen Befehl und einen Bereichswert aufweist, der zum Verweis auf eine der Trust-Roots umgewidmet ist,
**durch** Prüfen des Bereichswerts zu bestimmen (402), auf welche Trust-Root das Befehlsordinal abzielt, und
den Befehl auszuführen (404), auf den der Ordinalindex verweist, wobei während der Ausführung die Trust-Root verwendet wird, auf die abgezielt ist.

2. Vorrichtung nach Anspruch 1, wobei jede Trust-Root folgendes umfaßt:
einen Endorsement-Schlüssel,
einen Storage-Root-Schlüssel,
einen Unikatsbeleg, und
ein oder mehrere weitere Stücke an Schlüsselinformationen und Konfigurationsinformationen.

3. Vorrichtung nach Anspruch 1, wobei der Speicher nichtflüchtigen Flash-Speicher enthält.

4. Verfahren, aufweisend:
Speichern mehrerer Trust-Roots innerhalb einer Vorrichtung eines Trusted-Platform-Moduls "TPM",
**gekennzeichnet durch** folgende Schritte:
Empfangen eines der Vorrichtung übersandten Befehlsordinals, das einen Ordinalindex zum Verweis auf einen Befehl und einen Bereichswert, der zum Verweis auf eine der Trust-Roots umgewidmet ist, umfaßt,
Bestimmen (402), auf welche Trust-Root das Befehlsordinal abzielt, indem der Bereichswert geprüft wird, und
Ausführen (404) des Befehls, auf den der Ordinalindex verweist, wobei während der Ausführung die Trust-Root verwendet wird, auf die abgezielt ist.

5. Verfahren nach Anspruch 4, wobei jede Trust-Root folgendes umfaßt:
einen Endorsement-Schlüssel,
einen Storage-Root-Schlüssel,
einen Unikatsbeleg, und
ein oder mehrere weitere Stücke an Schlüsselinformationen und Konfigurationsinformationen.

6. Verfahren nach Anspruch 4, wobei der Speicher nichtflüchtigen Flash-Speicher enthält.

7. System, aufweisend:
eine erste Verbindung (500),
einen mit der ersten Verbindung verbundenen Prozessor (502),
einen mit der ersten Verbindung verbundenen Speicher (509),
eine zweite Verbindung (510), die eine Punkt-zu-Punkt-Verbindung umfaßt,
einen mit der ersten und der zweiten Verbindung verbundenen Chipsatz (506), und
ein Trusted-Platform-Modul "TPM" (512) nach einem der vorhergehenden Ansprüche 1 bis 3, das mit dem Chipsatz verbunden ist (514).

8. System nach Anspruch 7 mit einem oder mehreren weiteren Prozessoren, die mit der ersten Verbindung verbunden sind.

## Revendications

1. Dispositif (100) à puce TPM, comprenant :
un stockage pour contenir une pluralité de racines de confiance (104, 106) ;
**caractérisé par** :
une logique TPM (102) destinée à :
recevoir (400) un pointeur d'instructions envoyé au dispositif, le pointeur d'instructions comprend un indice ordinal pour pointer vers une instruction, et une valeur de domaine réaffectée pour pointer vers une racine de confiance parmi la pluralité de racines de confiance ;
déterminer (402) quelle racine de confiance est ciblée par le pointeur d'instructions en examinant la valeur de domaine ; et
exécuter (404) l'instruction vers laquelle pointe l'indice ordinal, où la racine de confiance ciblée est utilisée lors de l'exécution.

2. Dispositif de la revendication 1, dans lequel chaque racine de confiance comprend :
une clé de chiffrement de type Endorsement Key ;
une clé de chiffrement de type Storage Root ;
une preuve d'unicité ; et
un ou plusieurs éléments supplémentaires d'informations sur les clés et d'informations de configuration.

3. Dispositif de la revendication 1, dans lequel le stockage comprend une mémoire flash non volatile.

4. Procédé, comprenant le fiait :
de stocker une pluralité de racines de confiance dans un dispositif à puce TPM ;
**caractérisé par** les étapes suivantes qui consistent :
à recevoir un pointeur d'instructions envoyé au dispositif, le pointeur d'instructions comprenant un indice ordinal pour pointer vers une instruction, et une valeur de domaine, réaffectée pour pointer vers une racine de confiance parmi la pluralité de racines de confiance ;
à déterminer (402) quelle racine de confiance est ciblée par le pointeur d'instructions en examinant la valeur de domaine ; et
à exécuter (404) l'instruction vers laquelle pointe l'indice ordinal, où la racine de confiance ciblée est utilisée lors de l'exécution.

5. Procédé de la revendication 4, dans lequel chaque racine de confiance comprend :
une clé de chiffrement de type Endorsement Key ;
une clé de chiffrement de type Storage Root ;
une preuve d'unicité ; et
un ou plusieurs éléments supplémentaires d'informations sur les clés et d'informations de configuration.

6. Procédé de la revendication 4, dans lequel le stockage comprend une mémoire flash non volatile.

7. Système comprenant :
une première interconnexion (500) ;
un processeur (502) couplé à la première interconnexion ;
une mémoire (504) couplée à la première interconnexion ;
une deuxième interconnexion (510), où la deuxième interconnexion comprend une interconnexion point à point ;
un jeu de puces (506) couplé aux première et deuxième interconnexions ; et
la puce TPM (512) de l'une quelconque des revendications précédentes 1 à 3, couplée (514) au jeu des puces.

8. Système de la revendication 7, comprenant en outre un ou plusieurs processeurs supplémentaires couplés à la première interconnexion.
